Europäisches Patentamt

European Patent Office

Office européen des brevets

(11) Publication number: **0 489 335 A1**

# EUROPEAN PATENT APPLICATION

(21) Application number: **91120141.6**

(22) Date of filing: **26.11.91**

(51) Int. Cl.5: **B29C 33/56**, B29C 33/02

(30) Priority: **03.12.90 US 620950**

(43) Date of publication of application:
**10.06.92 Bulletin 92/24**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Kim, Bang Mo**
**1505 Wheatly Court**
**Schenectady, New York 12309(US)**
Inventor: **Foust, Donald Franklin**
**1 Spring Valley Circle**
**Scotia, New York 12302(US)**
Inventor: **Baumgartner, Charles Edward**
**945 Mohegan Road**
**Schenectady, New York 12309(US)**

(74) Representative: **Catherine, Alain**
**General Electric France Service de Propriété**
**Industrielle 18 Rue Horace Vernet**
**F-92136 Issy-Les-Moulineaux Cedex(FR)**

(54) Insulated mold structure with multilayered metal skin.

(57) A multilayered insulated mold structure is provided. An insulation layer provided on the mold base retains heat at the molding surface, thereby increasing surface smoothness of the molded part. A multilayered skin layer (14) is provided on the insulation layer. The skin layer comprises a plurality of sublayers which are designed to provide improved adhesion, mechanical strength and abrasion resistance.

FIG. 1

EP 0 489 335 A1

## Cross Reference to Related Applications

This application is related to the following co-pending applications: "Multilayer Composite Mold Structure for Molding on Hot Surfaces", Serial No. 07/435,639, filed November 13, 1989 which is a continuation of Serial No. 07/175,078, filed March 30, 1988 and now abandoned; "Apparatus for Blow Molding Parts with a Smooth Surface", Serial No. 07/435,640, filed November 13, 1989 which is a continuation of Serial No. 07/250,806, filed September 29, 1988 and now abandoned; and "Plastic Mold Structure and Method of Making", Serial No.07/437,051, filed November 15, 1989. All of these related applications are assigned to the same assignee as the present invention.

## Background of the Invention

The present invention relates generally to molds and more particularly to insulated molds with a multilayered metal skin having improved adhesion, mechanical strength and abrasion resistance.

Molding of thermoplastic resins is a promising technique for producing relatively thin, wide and strong plastic parts such as panels for use in automobiles or appliances. Depending on specific requirements, such exterior plastic parts can be made by any of a number of molding processes such as blow molding, injection molding and compression molding. Blow molding involves the extrusion of a molten tube of resin called a parison into a mold. The mold closes around the parison, pinching the bottom of the parison closed. A gas such as air is then introduced causing the tube to expand against the cool surfaces of the mold. When the parison comes into contact with the cool mold surface, the plastic at the surface quickly freezes. This results in surface imperfections such as die lines, fold lines, pores and voids.

Injection molding involves injecting molten thermoplastic resin into a mold apparatus. Molds for injection molding of thermoplastic resin are usually made from metal material such as iron, steel, stainless steel, aluminum alloy or brass. Such materials are advantageous in that they have high thermal conductivity and thus allow the melt of thermoplastic resin to cool rapidly and shorten the molding cycle time. However, because of the rapid cooling, the injected resin freezes instantaneously at the mold surface, resulting in a thin solid layer. Quick quenching of the melt at the mold surface creates several problems, particularly when molding resins which contain large amounts of fillers in the form of fibers and powders. The freezing of these materials at the mold surfaces creates rough surfaces such as exposed fillers, voids and porosity. Processing difficulties arise when producing thin, large parts.

The quick solidification of the melt combined with limited flowability of the materials makes it difficult to achieve melt flow over a large area. The use of multiple gates for large and/or complex mold cavities produces weld lines, which are unsightly and weak. Another important issue in injection molding of high quality parts is the residual stresses in the molded parts. Residual stress inside a part can result in dimensional instability over the lifetime of the part. Non-uniform residual stresses also produce differential refractive indices. The dimensional stability and uniformity of refractive index are critically required for high quality parts.

Compression molding processes of glass reinforced thermoplastic sheets begin with heating the composite blanks. The material is heated above its melting point or if an amorphous material at least substantially above its glass transition temperature. When the composite blanks are heated, they expand (loft) due to the recoil forces within the fibers. The hot blanks are then pressed between cool mold surfaces which are below the melting point or glass transition temperature (typically 175°-250°F). Contact with the cool mold surfaces results in frozen resin on the surface of the blank. This creates unfilled areas in the form of exposed fibers and surface porosity. Since the resin at the cold surface is frozen and does not flow, rough boundaries between the charged and newly formed areas are produced.

One important requisite for the use of molded plastic parts in large, exterior panel applications is a smooth surface quality. The surface of molded plastic parts should be as smooth as that of current exterior parts made from sheet metal. However, as described above, conventionally molded plastic parts require labor intensive sanding and polishing operations to achieve the desired degree of surface smoothness.

An approach to improve the surface quality of molded plastic parts has been disclosed in the above mentioned applications Serial No. 07/435,639 and 07/435,640. These applications disclose molding apparatuses in which an insulating layer is disposed on the mold core and a thin skin layer is disposed on the insulating layer. Due to the insulation, the skin layer retains heat during the molding operation, thereby avoiding the surface irregularities created by rapid surface cooling. Thus, these devices provide a smooth surface while maintaining a relatively short cycle time.

## Summary of the Invention

The present invention adopts the multilayer insulated mold structure described above while adding improved adhesion, mechanical strength and abrasion resistance characteristics. These improved qualities are achieved by providing a plurality of skin layers on the insulating layer instead of a single skin layer. The abovementioned co-pending application, Serial No. 07/437,051 describes the use of a multilayered skin layer. However, in Serial No. 07/437,051, the mold structure is only partially insulated and the multilayered skin is provided in order to prevent delamination of layers caused by different coefficients of thermal expansion.

In a preferred embodiment of the present invention, three skin layers are placed successively on the insulating layer. A thin layer of metal which exhibits good adhesion to the insulating layer is deposited first, directly to the insulating layer. A layer of metal chosen to provide mechanical strength is then placed on top of the first layer. Finally, an outer layer having superior abrasion resistance is deposited.

In accordance with a further embodiment, the present invention comprises two outer skin layers disposed on the insulating layer. By selecting proper combinations of materials, the two-layer embodiment can possess the desired characteristics of good adhesion, strength and abrasion resistance of the three-layer embodiment.

It is therefore an objective of the present invention to provide an insulated mold structure which produces molded parts with smooth surfaces in short cycle times.

It is a further objective of the present invention to provide an insulated mold structure having improved adhesion between the insulating layer and skin layer, improved mechanical strength and improved abrasion resistance.

## Brief Description of the Drawing

The subject matter which is regarded as the invention is particularly pointed out and distinctly claimed in the concluding portion of the specification. The invention, however, both as to organization and method of practice, together with further objects and advantages thereof may best be understood by reference to the following description taken in conjunction with the accompanying drawing figures in which:

Figure 1 is a partial side elevation in section of a preferred embodiment of the mold structure.

Figure 2 is a partial side elevation in section of another preferred embodiment of the mold structure.

Figure 3 is a graph showing the transient temperature response in blow molding processes in molding apparatuses with and without insulation.

## Detailed Description of the Invention

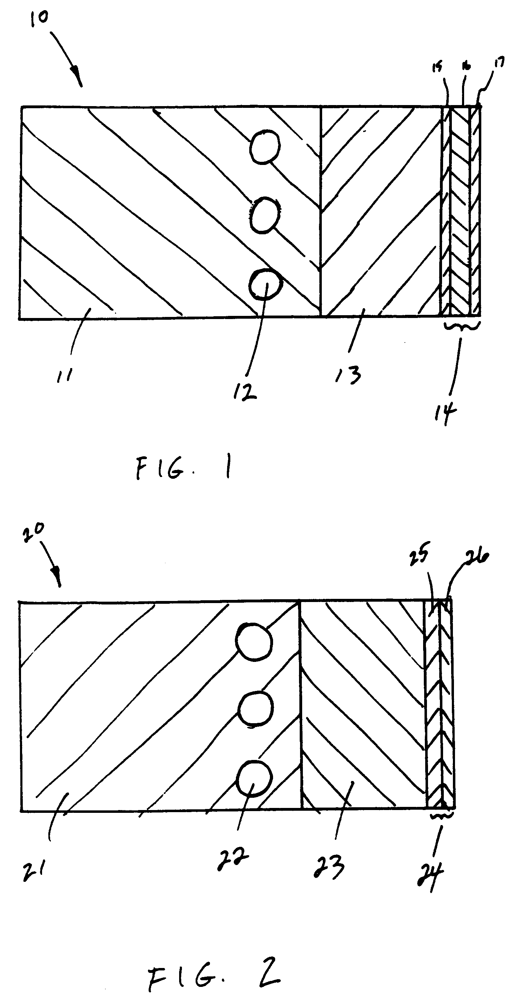

Referring now to the drawings wherein like numerals indicate like elements throughout, Figure 1 shows a partial side elevation of the multilayer mold 10 of the present invention. The mold 10 comprises a mold base or core 11 of high thermally conductive material. Cooling lines 12, such as copper pipes, are provided in the core for receiving a cooling fluid to reduce cycle time. The core 11 is covered by a thin thermal insulating layer 13. The thermal insulating layer can be fabricated from low thermally conductive material such as high temperature thermoplastics, thermosets, plastic composites, porous metals, ceramics and low-conductivity metal alloys. Other low thermally conductive materials used for insulation could also be used. Because the insulating layer is often not mechanically strong and cannot produce surfaces of high quality when used as a mold surface, a thin hard skin layer 14 is bonded to the insulating layer. The skin layer must exhibit a number of desired properties. These properties include strong adhesion between the skin layer and the insulating layer, good abrasion resistance and high mechanical strength. Other important properties include thermal conductivity and oxidation resistance.

To achieve these properties, the hard skin layer is fashioned from a plurality of sublayers which contribute one or more of the desired properties. In a preferred embodiment, the "tailored" skin layer comprises three sublayers. A thin sublayer 15 is first disposed directly onto the insulating layer. This first, inner sublayer 15 is made of a material which exhibits good adhesion strength as well as thermal conductivity and oxidation resistance. Examples of such materials are Enthone electroless nickel 422 and Shipley electroless copper 250. Next, an intermediate sublayer 16 is disposed on the inner sublayer. The intermediate sublayer must provide a high degree of mechanical strength and thermal conductivity. Examples of preferred materials for the intermediate sublayer are Lea Ronal electrolytic nickel PC3, electrolytic copper and Enthone electroless nickel 426. Lastly, a thin outer sublayer 17 is disposed on the intermediate level. The outer sublayer provides superior abrasion resistance. Preferred materials for accomplishing this are Enthone electroless nickel 426, Englehard electrolytic palladium nickel 80/20, TiN and chromium. Ideally, the inner and outer sublayers are 1 to 25 microns in thickness, while the intermediate sublayer is 25 to 250 microns thick to enhance mechanical strength.

The result of these three sublayers is a thin hard skin layer which has a smooth, hard molding surface as well as good adhesion strength, structural integrity and abrasion resistance. The insulating layer 13 and the hard skin layer 14 can be applied, for example, by lamination, deposition or sintering. The high conductivity core 11 provides good heat transfer to and from the insulating layer. The core is cooled by cooling passages 12 which carry cooling fluid through the core. The core can be made from any adequate material such as steel, aluminum, ceramics, glass or plastic composite materials. The core does not come into contact with the material being molded, therefore it is not subject to wear by the material being molded.

Figure 2 shows another embodiment of the invention in which the main objectives of improved adhesion, good mechanical strength and high abrasion resistance are accomplished using only two skin sublayers. In Figure 2, a mold 20 comprises a mold base or core 21 made of a high thermally conductive material. Cooling means 22 are provided within the core 21 in order to enhance cooling of the core and thereby reduce cycle time. A thermal insulating layer 23 is disposed on the interior surface of the mold core. The insulating layer preferably comprises a film of a polyimide resin available under the trademark EYMYD from the Ethyl Corporation, a film of the polyimide EYMYD combined with one of several particulate fillers such as glass, AlSiO$_3$, BaSO$_4$, Al$_2$O$_3$, etc., or a layer of filled EYMYD coated with a layer of non-filled EYMYD. However, the insulator can be made from any material with an adequately low thermal conductivity, such as high temperature thermoplastics, thermosets, plastic composites, porous metals, ceramics and low-conductivity metal alloys.

A thin, hard skin layer 24 is bonded to the insulating layer to provide a mechanically strong mold surface for producing high quality molded surfaces. In this embodiment, the skin layer 24 comprises two sublayers; a first, inner sublayer 25 which is attached directly to the insulating layer, and a second, outer sublayer 26 which is disposed on the inner sublayer 25. There are many variations of materials from which the first and second sublayers 25,26 can be made in order to achieve the objectives of the present invention.

The first sublayer 25 may be made of a layer electroless copper having a thickness of 1 to 10 microns. This sublayer provides substantial adhesion to the surface of the insulating layer and the electrical conductivity needed to electroplate the second sublayer 26 to the first sublayer. Alternatively, the first sublayer 25 may comprise a coating of either an electroless nickel-boron alloy such as Allied Kelite 752 or an electroless nickel-phosphorus alloy such as Allied Kelite 1000 or Enthone 426. When using one of these materials, the first sublayer has a thickness in the range of 1 to 250 microns. The thickness is preferably 10 to 20 microns if the second sublayer is to be electrolytically applied and 50 to 200 microns if the second sublayer is to be electrolessly applied. These electroless nickel alloy sublayers provide superior oxidation resistance as well as acceptable adhesion to the insulating layer. A thicker first sublayer provides good mechanical strength and precludes the need to deposit a thick electrolytic second sublayer.

With the first sublayer comprising either the electroless copper or one of the electroless nickel alloys, the second sublayer 26 can comprise an electroplated material selected from the group including nickel, a nickel-phosphorus alloy, a nickel-palladium alloy, cobalt and chromium. These materials provide high oxidation and abrasion resistance as well as good mechanical strength. The selected metal type and required thickness will depend on the molding application being used. For instance, electroplated nickel will provide sufficient protection for blow molding, while injection molding may require a nickel-phosphorus alloy or chromium for superior oxidation and abrasion resistance.

The second sublayer 26 can also be applied via electroless plating rather than electroplating. In this case, the first sublayer 25 still comprises either the electroless copper or one of the electroless nickel alloys described above. In one variation, the second sublayer is either an electroless nickel-boron alloy or an electroless nickel-phosphorus alloy both of which exhibit good oxidation and abrasion resistance. Such materials facilitate application to complex shapes while maintaining uniform thicknesses. In another variation, the second sublayer 26 comprises a composite of an electroless nickel coating and an abrasion resistant particulate material such as SiC, BN, Al$_2$O$_3$, WC or diamond. This provides a fully electrolessly deposited layer with abrasion resistance that is far superior to that of a standard electroless nickel layer while retaining the strength and oxidation resistance inherent to electroless nickel layers.

In operation, hot resin is placed in the mold structure. Upon contacting the skin layer, the hot resin heats the skin layer to a temperature which is above the glass transition temperature, $T_g$. The insulating layer causes the temperature of the skin layer to remain above the glass transition temperature for the duration of the molding process. Consequently, the resin flows freely during molding and smooth surfaces result.

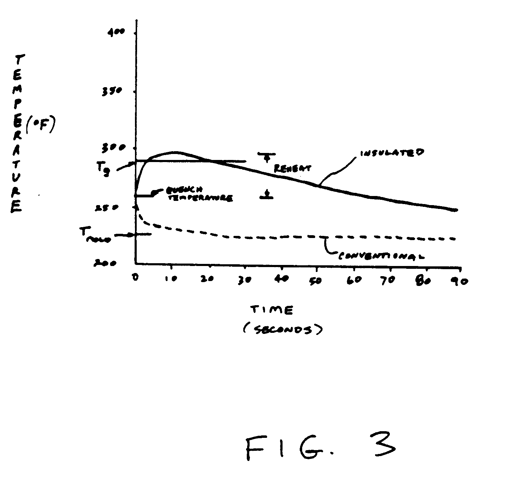

Figure 3 shows the transient temperature response of a parison outer surface temperature in thermal analyses of blow molding processes. The analyses were performed on a sample with a 1/8 inch thick molten resin layer using, first, a multilayer insulated mold structure consisting of a 1/64 inch total skin layer, a plastic composite insulating layer and a metal mold core and, second, a conventional mold structure without insulation. In Figure 3, the solid line represents the transient temperature response in the insulated mold and the dotted line represents the response in the conventional mold. As seen in the Figure, the parison in the apparatus without insulation is immediately cooled below the glass transition temperature, $T_g$. Such rapid cooling will cause rough surfaces. On the other hand, with the insulated mold structure, the parison surface is initially quenched by the cool skin and temporarily falls below the glass transition temperature, but the surface is then reheated by the hot melt from within the molten plastic layer. Since the surface temperature increases to above the glass transition temperature, the resin fills and duplicates the mold surface, thereby avoiding rough surfaces.

From the foregoing description, it will be seen that the present invention provides an improved molding apparatus which is applicable to many types of molding processes including injection, compression and blow molding. Existing molding devices can be easily adapted to incorporate the present invention without great effort or expense.

While the invention has been particularly shown and described, it will be understood by those skilled in the art that various changes in form and detail may be made without departing from the spirit and scope of the invention.

## Claims

1. A multilayer mold for molding thermoplastic into finished parts comprising:
    a core;
    an insulating layer bonded to said core for slowing initial cooling of the thermoplastic during molding; and
    a skin layer bonded to the insulating layer, said skin layer being formed from a plurality of sublayers.

2. The mold of claim 1 wherein at least one of the plurality of sublayers provides abrasion resistance.

3. The mold of claim 1 wherein at least one of the plurality of sublayers provides adhesion strength.

4. The mold of claim 1 wherein at least one of the plurality of sublayers provides structural integrity.

5. The mold of claim 1 wherein the plurality of sublayers comprises first, second and third sublayers.

6. The mold of claim 5 wherein the first sublayer is bonded directly to the insulating layer, the second sublayer is bonded on top of the first sublayer, and the third sublayer is bonded on top of the second sublayer.

7. The mold of claim 5 wherein the first sublayer comprises a material which provides strong adhesion between said skin layer and said insulating layer.

8. The mold of claim 5 wherein the second sublayer comprises a material which provides structural integrity.

9. The mold of claim 5 wherein the third sublayer comprises a material which provides a high degree of abrasion resistance.

10. The mold of claim 1 wherein said plurality of sublayers comprises a first sublayer which is bonded directly to said insulating layer and a second sublayer which is bonded onto said first sublayer.

11. The mold of claim 10 wherein said first sublayer comprises a material selected from the group consisting of an electroless copper, an electroless nickel-boron alloy and an electroless nickel-phosphorus alloy.

12. The mold of claim 11 wherein said second sublayer comprises an electroplated material selected from the group consisting of nickel, a nickel-phosphorus alloy, a nickel-palladium alloy, cobalt and chromium.

13. The mold of claim 11 wherein said second sublayer comprises a material selected from the group consisting of an electroless nickel-boron alloy and an electroless nickel-phosphorus alloy.

14. The mold of claim 11 wherein said second sublayer comprises a composite of electroless nickel and an abrasion resistant material selected from the group consisting of SiC, BN, $Al_2O_3$, WC and diamond.

15. The mold of claim 1 wherein said core includes means for cooling.

16. A multilayer mold for molding thermoplastic into finished parts comprising:
    a core;
    an insulating layer bonded to said core for slowing initial cooling of the thermoplastic during molding; and
    a skin layer bonded to the insulating layer and having the desired contour and surface characteristics of the finished part, said skin layer comprising first, second and third sublayers, wherein the first sublayer comprises a material which provides strong adhesion between said skin layer and said insulating layer, the second sublayer comprises a material which provides structural integrity, and the third sublayer comprises a material which provides a high degree of abrasion resistance.

17. The mold of claim 16 wherein the first sublayer is bonded directly to said insulating layer, the second sublayer is bonded on top of the first sublayer, and the third sublayer is bonded on top of the second sublayer.

18. The mold of claim 17 wherein the first sublayer comprises a material selected from the group including Enthone electroless nickel 422 and Shipley electroless copper 250.

19. The mold of claim 18 wherein the first sublayer is 1 to 25 microns thick.

20. The mold of claim 17 wherein the second sublayer comprises a material selected from the group including Lea Ronal electrolytic nickel PC3, electrolytic copper and Enthone electroless nickel 426.

21. The mold of claim 20 wherein the second sublayer is 25 to 250 microns thick.

22. The mold of claim 17 wherein the third sublayer comprises a material selected from the group including Enthone electroless nickel 426, Englehard electrolytic palladium nickel 80/20, TiN and chromium.

23. The mold of claim 22 wherein the third sublayer is 1 to 25 microns thick.

24. The mold of claim 16 wherein said core includes means for cooling.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4 225 109 (YOTSUTSUJI)<br>* the whole document * | 1-24 | B29C33/56<br>B29C33/02 |
| Y | EP-A-0 335 100 (GENERAL ELECTRIC CO.)<br>* the whole document * | 1-24 | |
| Y | WORLD PATENTS INDEX<br>Derwent Publications Ltd., London, GB;<br>AN 79-76039B<br>& JP-A-54 114 436 ( KOBE STEEL K.K.) 6 September 1979<br>* abstract * | 1-24 | |
| A | PATENT ABSTRACTS OF JAPAN<br>vol. 4, no. 169 (M-43)(651) 21 November 1980<br>& JP-A-55 118 833 ( YOSHINO KOGIOSHO K.K. ) 12 September 1980<br>* abstract * | 1, 16 | |
| A | PATENT ABSTRACTS OF JAPAN<br>vol. 11, no. 259 (C-441)(2706) 21 August 1987<br>& JP-A-62 060 879 ( NGK INSULATORS ) 17 March 1987<br>* abstract * | 1, 16 | TECHNICAL FIELDS SEARCHED (Int. Cl.5 )<br><br>B29C |
| A | DE-A-1 779 419 (HERBERTS & CO.)<br>* the whole document * | 1-24 | |
| A | FR-A-2 319 477 (PLASTIC OMNIUM)<br>* page 7 * | 1, 16 | |

The present search report has been drawn up for all claims

| Place of search | Date of completion of the search | Examiner |
|---|---|---|
| THE HAGUE | 17 JANUARY 1992 | R. SOZZI |